(19) Europäisches Patentamt
European Patent Office
Office européen des brevets

(11) Numéro de publication: **0 037 349 B1**

# (12) FASCICULE DE BREVET EUROPEEN

(45) Date de publication du fascicule du brevet: **09.02.83**

(51) Int. Cl.³: **C 07 F 9/165**

(21) Numéro de dépôt: **81420039.0**

(22) Date de dépôt: **19.03.81**

(54) **Procédé de préparation d'O,O-diméthyl-phosphorodithioate de mercaptosuccinate d'ethyl (malathion(R)).**

(30) Priorité: **21.03.80 FR 8007243**

(43) Date de publication de la demande: **07.10.81 Bulletin 81/40**

(45) Mention de la délivrance du brevet: **09.02.83 Bulletin 83/6**

(84) Etats contractants désignés: **BE CH DE FR GB IT LI NL SE**

(56) Documents cités:
**FR-A-1 427 827**
**FR-A-1 541 883**

(73) Titulaire: **RHONE-POULENC AGROCHIMIE, 14-20, rue Pierre Baizet, F-69009 Lyon (FR)**

(72) Inventeur: **Rouy, Noel, 40, rue Pierre Guilbert, F-91330 Yerres (FR)**
Inventeur: **Gros, Georges, 124, avenue Général Leclerc, F-92340 Bourg-La-Reine (FR)**

(74) Mandataire: **Brachotte, Charles et al, RHONE-POULENC AGROCHIMIE BP 9163-09, F-69263 Lyon Cedex 1 (FR)**

EP 0 037 349 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

Procédé de préparation d'O,O-diméthyl-phosphorodithioate de mercaptosuccinate d'ethyl (malathion®)

La présente invention concerne un procédé de préparation amélioré d'insecticide et plus particulièrement d'O,O-diméthyl-phosphorodithioate de mercaptosuccinate d'éthyle.

Ce produit, également appelé (malathion®) est un produit de formule

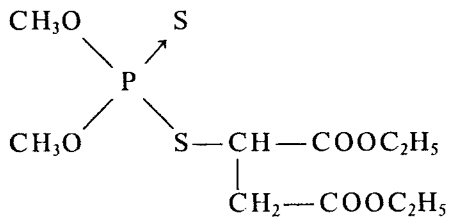

Différents procédés de préparation et/ou purification du malathion sont connus et ont conduit à des résultats plus ou moins satisfaisants à partir de réactifs de natures variées. Le brevet français 1 541 883 décrit un procédé de préparation de malathion par réaction d'acide diméthyldithiophosphorique sur du maléate d'éthyle en milieu solvant, ce procédé étant caractérisé par le fait que le mélange réactionnel est soumis à une évaporation dans un évaporateur à courte durée de passage (également appelé flash distillation).

L'acide diméthyldithiophosphorique a pour formule

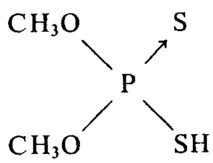

Bien que le procédé du brevet français 1 541 883 constitue un progrès par rapport aux procédés antérieurs, ce procédé présente plusieurs inconvénients auxquels il est souhaitable de remédier.

En particulier la productivité de l'appareillage est fortement amoindrie par la présence en début de réaction d'une quantité importante de solvant, par la limitation de la vitesse de réaction qui en résulte, et par la limitation imposée au taux de transformation des réactifs.

Ces inconvénients ne sont palliés qu'en partie par l'évaporation rapide en continu de tout le mélange réactionnel; cette évaporation est en effet rendue plus difficile par le fait même que le mélange à distiller est un mélange complexe, et qu'elle porte sur des quantités de produits assez importantes.

En outre le recyclage du maléate d'éthyle non transformé d'une opération à l'autre présente l'inconvénient d'accroître la teneur en fumarate d'éthyle (produit d'isomération du maléate) qui réagit plus lentement et s'accumule dans le milieu réactionnel; son élimination nécessite des traitements spéciaux, par exemple à l'aide de sulfures ou sulfites.

Un but de la présente invention est de fournir un procédé permettant la production de malathion de bonne qualité.

Un autre but de la présente invention est de fournir un procédé permettant la production de malathion avec une bonne productivité et de bons rendements.

Il a maintenant été trouvé que ces buts pouvaient être atteints grâce au procédé selon l'invention.

Ce procédé est caractérisé en ce que

a) on fait réagir du maléate d'éthyle avec un excès d'acide diméthyldithiophosphorique en présence d'un solvant capable de former un azéotrope avec l'acide diméthyldithiophosphorique
b) l'on distille un mélange azéotropique d'acide diméthyldithiophosphorique et du solvant,
c) ce distillat est refroidi et décanté,
d) la phase (de ce distillat refroidi et décanté) comprenant principalement le solvant et un peu d'acide diméthyldithiophosphorique est recyclée dans le milieu réactionnel comprenant principalement le maléate d'éthyle et l'acide diméthyldithiophosphorique (et le malathion en cours de formation)
e) la phase (du distillat refroidi et décanté) comprenant principalement l'acide diméthyldithiophosphorique et un peu de solvant est soutirée.

Le solvant capable de former un azéotrope avec l'acide diméthyldithiophosphorique est en fait, un solvant capable de former un mélange liquide hétérogène à température ambiante avec l'acide diméthyldithiophosphorique, c'est-à-dire que le mélange des deux constituants est capable de décanter. Parmi les solvants de ce type, on utilise avantageusement ceux ayant un point d'ébullition compris entre 160 et 240° C. Il peut s'agir d'un solvant unique ou d'un mélange de solvants.

Plus spécifiquement on préfère utiliser comme solvant les hydrocarbures saturés ayant un point d'ébullition compris entre 160 et 240° C et plus spécialement les hydrocarbures aliphatiques tels que le décane, le dodécane, le tétradécane, les hydrocarbures cycloaliphatiques tels que la décaline.

L'excès d'acide diméthyldithiophosphorique par rapport au maléate d'éthyle est tel que le rapport molaire des quantités mises en oeuvre de ces deux réactifs est compris entre 1,05 et 2, de préférence entre 1,15 et 1,4.

L'utilisation d'un tel excès d'acide permet d'obtenir de bons rendements par rapport au maléate d'éthyle, ce qui a en outre l'avantage de contribuer à diminuer la teneur en maléate d'éthyle résiduel dans le malathion final, ce qui est un avantage important.

La réaction entre l'acide diméthyldithiophosphorique et le maléate d'éthyle s'effectue par simple mise en contact des réactifs; le mélange commence habituellement par s'échauffer de lui-même et on laisse donc la réaction commercer à s'effectuer d'ellemême, puis on peut poursuivre la réaction par chauffage extérieur à température comprise entre 50 et 100° C, de préférence comprise entre 60 et 90° C.

Dans le procédé selon l'invention le taux de transformation du maléate d'éthyle est généralement supérieur à 90%, de préférence supérieur à 99%.

La quantité de solvant et notamment d'hydrocarbure saturé contenue dans le milieu réactionnel est généralement comprise entre 1 et 15% en poids par rapport à l'acide diméthyldithiophosphorique mis en oeuvre, de préférence entre 3 et 8%.

Le mélange d'acide diméthyldithiophosphorique et de solvant (hydrocarbure saturé) est avantageusement tel qu'obtenu par les procédés connus de préparation d'acide diméthyldithiophosphorique opérés en présence dudit solvant.

La distillation azéotropique (b) est avantageusement opérée seulement en fin de réaction dans le but de maintenir un excès d'acide diméthyldithiophosphorique. Elle s'effectue de préférence sous une pression absolute réduite à moins de 80 millibars, et plus spécialement à moins de 27 millibars.

Le distillat azéotropique est refroidi (c) jusqu'à température où il se produit une dissociation en deux phases liquides du mélange acide diméthyldithiophosphorique/solvant (hydrocarbure saturé). Cette température de refroidissement est avantageusement comprise entre 0 et 50° C, de préférence entre 15 et 40° C.

Lors de la décantation (c) du mélange acide diméthyldithiophosphorique/solvant, la phase supérieure est généralement la phase contenant un excès de solvant; autrement dit, cette phase supérieure est la phase liquide contenant principalement le solvant et un peu d'acide diméthyldithiophosphorique.

Lors de la même décantation (c) du mélange acide diméthyldithiophosphorique/solvant, la phase liquide inférieure est généralement la phase contenant un excès d'acide diméthyldithiophosphorique; autrement dit, cette phase inférieure est la phase comprenant principalement l'acide diméthyldithiophosphorique et un peu de solvant.

La phase inférieure est soutirée (e) et est réutilisable pour une opération ultérieure.

La phase supérieure est avantageusement recyclée (d) dans le milieu réactionnel contenant le malathion; même si la réaction est terminée au moment où ce recyclage a lieu, ce recyclage permet d'introduire le solvant (hydrocarbure saturé) dans le milieu réactionnel ce qui permet à la distillation azéotropique d'être poursuivie bien que la quantité globale de solvant (hydrocarbure saturé) mise en oeuvre soit faible. Ce recyclage permet également à la distillation azéotropique de l'acide diméthyldithiophosphorique d'être poursuivie à une température minimisant la dégradation de cet acide.

Lorsque ces diverses opérations sont terminées, le milieu réactionnel contient principalement du malathion et également un peu d'acide diméthyldithiophosphorique, de solvant (hydrocarbure saturé) et éventuellement d'autres impuretés.

Si l'on souhaite obtenir un malathion de qualité améliorée, on peut éliminer l'acide diméthyldithiophosphorique et autres impuretés acides par neutralisation à l'aide d'un agent alcalin et lavage à l'eau; l'acide diméthyldithiophosphorique est alors éliminé sous forme de solution aqueuse de son sel alcalin, cette solution aqueuse n'étant pas miscible avec le malathion.

Si l'on veut encore améliorer la pureté du malathion on peut le soumettre à des traitements supplémentaires.

Comme traitement supplémentaire préféré, on peut citer l'évaporation rapide (ou flash distillation) des fractions légères. L'évaporation rapide a l'avantage d'éviter toute décomposition intempestive des produits présents et notamment du malathion.

Cette distillation ou évaporation rapide est avantageusement effectuée en continu avec un temps de séjour des produits traités inférieur à 5 mn, de préférence inférieur à 1 mn. Les évaporateurs à film ou à pellicules conviennent particulièrement bien pour ce genre d'opération.

Selon une variante avantageuse de l'invention on effectue une évaporation rapide en présence d'eau (ou avec entrainement à la vapeur d'eau) et éventuellement une évaporation rapide sous pression réduite.

L'évaporation rapide en présence d'eau est effectuée à température comprise le plus souvent entre 90 et 150° C et de préférence entre 100 et 120° C; la présence d'eau permet de faciliter l'élimination des

restes de solvant (hydrocarbure saturé) et de maléate et fumarate d'éthyle, notamment par formation d'azéotrope(s). L'eau permet de réaliser un entraînement à la vapeur d'eau. Une quantité d'eau comprise entre 20 et 80% en poids par rapport au malathion est avantageuse.

L'évaporation rapide sous pression réduite est effectuée avantageusement entre 70 et 150° C à des pressions absolues comprises entre 1 et 65 millibars, de préférence entre 4 et 20 millibars.

Le procédé selon l'invention permet donc d'obtenir du malathion avec une bonne productivité, un bon rendement et un bon degré de pureté.

L'exemple suivant, donné à titre non limitatif, illustre l'invention et montre comment elle peut être mise en oeuvre.

Exemple

Dans un réacteur de 1 litre, on charge 240,8 g d'acide diméthyldithiophosphorique brut contenant 1,3 mole d'acide pur (205,8 g) et 6% en poids de dodécane, puis l'on ajoute progressivement, en 1 h 30 mn, 172 g de maléate d'éthyle.

Ce mélange est ensuite maintenu pendant 4 heures à une température de 90° C. L'on procède alors à une distillation sous une pression absolue réduite à environ 7 à 13 millibars; le mélange azéotropique dodécane + acide diméthyldithiophosphorique est distillé sous forme de vapeur, le distillat est refroidi à 25° C et décanté en deux couches; la couche supérieure contenant principalement du dodécane est réintroduite en continu dans le réacteur.

Le milieu réactionnel contenant le malathion est neutralisé à l'aide d'une solution aqueuse de bicarbonate de sodium. On obtient ainsi du malathion avec un rendement de 98% par rapport au maléate d'éthyle mis en oeuvre.

On purifie le malathion par une distillation flash (dans un évaporateur à pellicule) à une température de 110° C et en présence de 50% (en poids) d'eau; puis on opère une seconde distillation flash (dans un évaporateur à pellicule) à 105° C et sous une pression absolue réduite à 6,6 millibars (temps de séjour $<1$ mn).

On obtient ainsi 328 g de malathion de pureté 95%.

La quantité d'acide diméthyldithiophosphorique récupéré dans la première distillation représente 76% de l'excès mis en oeuvre dans la réaction et est utilisé pour une nouvelle opération identique à celle déjà décrite.

**Revendications**

1. Procédé de préparation d'O,O-diméthyl-phosphorodithioate de mercaptosuccinate d'éthyle caractérisé en ce que

a) on fait réagir du maléate d'éthyle avec un excès d'acide diméthyldithiophosphorique en présence d'un solvant capable de former un azéotrope avec l'acide diméthyldithiophosphorique
b) l'on distille un mélange azéotropique d'acide diméthyldithiophosphorique et du solvant,
c) ce distillat est refroidi et décanté
d) la phase comprenant principalement le solvant et un peu d'acide diméthyldithiophosphorique est recyclée dans le milieu réactionnel
e) la phase comprenant principalement l'acide diméthyldithiophosphorique et un peu de solvant est soutirée.

2. Procédé selon la revendication 1 caractérisé en ce que le solvant est un hydrocarbure saturé de point d'ébullition compris entre 160 et 240° C.

3. Procédé selon la revendication 2 caractérisé en ce que le solvant est du décane, du tétradécane ou de la décaline.

4. Procédé selon la revendication 3 caractérisé en ce que le solvant est le dodécane.

5. Procédé selon l'une des revendications 1 à 4 caractérisé en ce que l'acide diméthyldithiophosphorique soutiré dans l'étape (e) est utilisé dans l'étape (a) d'une nouvelle opération.

6. Procédé selon l'une des revendications 1 à 5 caractérisé en ce que la quantité de solvant capable de former un azéotrope est comprise entre 1 et 15% par rapport à l'acide diméthyldithiophosphorique mis en oeuvre.

7. Procédé selon la revendication 6 caractérisé en ce que la quantité de solvant est comprise entre 3 et 8% de l'acide mis en oeuvre.

8. Procédé selon l'une des revendications 1 à 7 caractérisé en ce que le rapport molaire d'acide diméthyldithiophosphorique par rapport au maléate d'éthyle est compris entre 1,05 et 2.

9. Procédé selon la revendication 8 caractérisé en ce que le rapport molaire acide/maléate est compris entre 1,15 et 1,4.

10. Procédé selon l'une des revendications 1 à 9 caractérisé en ce que la température de réaction est

comprise entre 50 et 100° C.

11. Procédé selon l'une des revendications 1 à 10 caractérisé en ce que, dans l'étape (c), le distillat est refroidi entre 0 et 50° C.

12. Procédé selon la revendication 11 caractérisé en ce que la température de refroidissement est comprise entre 15 et 40° C.

13. Procédé selon l'une des revendications 1 à 12 caractérisé en ce qu'en fin de réaction le milieu réactionnel est neutralisé et lavé à l'eau et que le produit obtenu est soumis à une évaporation rapide des fractions légères avec temps de séjour dans l'évaporateur inférieur à 5 mn.

14. Procédé selon la revendication 13 caractérisé en ce que le temps de séjour est inférieur à 1 mn.

15. Procédé selon l'une des revendications 13 ou 14 caractérisé en ce qu'on effectue une évaporation rapide avec entraînement à la vapeur d'eau et une évaporation rapide sous pression reduite.

**Patentansprüche**

1. Verfahren zur Herstellung von Äthylmercaptosuccinat von O,O-Dimethylphosphorodithioat dadurch gekennzeichnet, daß man

a) Äthylmaleat mit Dimethyldithiophosphorsäure im Überschuß in Gegenwart eines Lösungsmittels, das mit der Dimethyldithiophosphorsäure ein Azeotrop zu bilden vermag, umsetzt,
b) daß man ein azeotropes Gemisch von Dimethyldithiophosphorsäure und Lösungsmittel destilliert,
c) daß man dieses Destillat abkühlt und dekantiert,
d) daß man die hauptsächlich das Lösungsmittel und wenig Dimethyldithiophosphorsäure umfassende Phase in das Reaktionsmilieu recycliert,
e) daß man die hauptsächlich Dimethyldithiophosphorsäure und etwas Lösungsmittel enthaltende Phase abzieht.

2. Verfahren gemäß Anspruch 1, dadurch gekennzeichnet, daß man einen gesättigten Kohlenwasserstoff mit einem Siedepunkt zwischen 160 und 240° C als Lösungsmittel verwendet.

3. Verfahren gemäß Anspruch 2, dadurch gekennzeichnet, daß man als Lösungsmittel Decan, Dodecan, Tetradecan oder Decalin verwendet.

4. Verfahren gemäß Anspruch 3, dadurch gekennzeichnet, daß man als Lösungsmittel Dodecan verwendet.

5. Verfahren gemäß einem der Ansprüche 1 bis 4, dadurch gekennzeichnet, daß die in Stufe (e) abgezogene Dimethyldithiophosphorsäure in der Stufe (a) eines neuen Arbeitsganges verwendet wird.

6. Verfahren gemäß einem der Ansprüche 1 bis 5, dadurch gekennzeichnet, daß die Menge an Lösungsmittel, das ein Azeotrop zu bilden vermag, zwischen 1 und 15%, bezogen auf die eingesetzte Dimethyldithiophosphorsäure, beträgt.

7. Verfahren gemäß Anspruch 6, dadurch gekennzeichnet, daß die Lösungsmittelmenge zwischen 3 und 8% der eingesetzten Säure beträgt.

8. Verfahren gemäß einem der Ansprüche 1 bis 7, dadurch gekennzeichnet, daß das Molverhältnis von Dimethyldithiophosphorsäure, bezogen auf Äthylmaleat, zwischen 1,05 und 2 beträgt.

9. Verfahren gemäß Anspruch 8, dadurch gekennzeichnet, daß das Molverhältnis Säure/Maleat zwischen 1,15 und 1,4 liegt.

10. Verfahren gemäß einem der Ansprüche 1 bis 9, dadurch gekennzeichnet, daß die Reaktionstemperatur zwischen 50 und 100° C beträgt.

11. Verfahren gemäß einem der Ansprüche 1 bis 10, dadurch gekennzeichnet, daß das Destillat in der Stufe (c) auf zwischen 0 und 50° C gekühlt wird.

12. Verfahren gemäß Anspruch 11, dadurch gekennzeichnet, daß die Abkühlungstemperatur zwischen 15 und 40° C liegt.

13. Verfahren gemäß einem der Ansprüche 1 bis 12, dadurch gekennzeichnet, daß am Ende der Reaktion das Reaktionsmilieu neutralisiert und mit Wasser gewaschen wird und daß das erhaltene Produkt einer raschen Verdampfung bzw. Entspannungsverdampfung der leichten Fraktionen mit einer Verweilzeit in dem Verdampfer unter 5 min unterworfen wird.

14. Verfahren gemäß Anspruch 13, dadurch gekennzeichnet, daß die Verweilzeit unter 1 min beträgt.

15. Verfahren gemäß einem der Ansprüche 13 oder 14, dadurch gekennzeichnet, daß man eine rasche Verdampfung bzw. Entspannungsverdampfung mit Wasserdampf und eine rasche Verdampfung unter vermindertem Druck durchführt.

**Claims**

1. A process for the preparation of S-(1,2-(dicarbethoxy)-ethyl)O,O-dimethyl phosphorodithioate which comprises,

a) reacting ethyl maleate with an excess of O,O-dimethyl-dithiophosphoric acid in the presence of a solvent which is capable of forming an azeotrope with the O,O-dimethyl-dithiophosphoric acid,
b) distilling an azeotropic mixture of O,O-dimethyl-dithiophosphoric acid and the solvent,
c) cooling this distillate and separating it by decantation,
d) recycling the phase comprising mainly the solvent and a small amount of O,O-dimethyl-dithiophosphoric acid into the reaction medium, and
e) drawing off the phase comprising mainly the O,O-dimethyl-dithiophosphoric acid and a small amount of solvent.

2. A process according to claim 1, wherein the solvent is a saturated hydrocarbon having a b.p. of between 160 and 240° C.

3. A process according to claim 2, wherein the solvent is decane, dodecane, tetradecane or decalin.

4. A process according to claim 3, wherein the solvent is dodecane.

5. A process according to one of claims 1 to 4, wherein the O,O-dimethyl-dithiophosphoric acid drawn off in step (e) is used in step (a) of a further operation.

6. A process according to one of claims 1 to 5, wherein the amount of the solvent which is capable of forming an azeotrope is between 1 and 15%, relative to the O,O-dimethyl-dithiophosphoric acid employed.

7. A process according to claim 6, wherein the amount of solvent is between 3 and 8% of the acid employed.

8. A process according to one of claims 1 to 7, wherein the molar ratio of O,O-dimethyl-dithiophosphoric acid to the ethyl maleate is between 1.05 and 2.

9. A process according to claim 8, wherein the molar ratio acid/maleate is between 1.15 and 1.4.

10. A process according to one of claims 1 to 9, wherein the reaction temperature is between 50 and 100° C.

11. A process according to one of claims 1 to 10, wherein, in step (c), the distillate is cooled to between 0 and 50° C.

12. A process according to claim 11, wherein the cooling temperature is between 15 and 40° C.

13. A process according to one of claims 1 to 12, wherein, at the end of the reaction, the reaction medium is neutralised and washed with water, and the resulting product is subjected to rapid evaporation of the volatile fractions, the residence time in the evaporator being less than 5 minutes.

14. A process according to claim 13, wherein the residence time is less than 1 minute.

15. A process according to one of claims 13 or 14, which comprises carrying out rapid evaporation with steam distillation, and rapid evaporation under reduced pressure.